# EUROPÄISCHE PATENTSCHRIFT

(11) **EP 4 298 415 B1**
(45) Veröffentlichungstag und Bekanntmachung des Hinweises auf die Patenterteilung: **25.06.2025**
(21) Anmeldenummer: 22709955.3
(22) Anmeldetag: 07.02.2022
(51) Int. Cl.: B60B 33/06, B60D 1/24, B60D 1/62, B60S 9/18, G01L 5/13, G01L 1/22, B60D 1/66

(54) **STÜTZLASTMESSUNG**
TONGUE WEIGHT MEASUREMENT
MESURE DE POIDS DE FLÈCHE D'ATTELAGE

(30) Priorität: 25.02.2021 DE 202021100947 U
(43) Veröffentlichungstag der Anmeldung: 03.01.2024
(73) Patentinhaber: Alois Kober GmbH, 89359 Kötz (DE)
(72) Erfinder: ECKLE, Volker, 89183 Holzkirch (DE); VILLACIS GUTJAHR, Pavel, 89356 Konzenberg (DE)
(74) Vertreter: ERNICKE Patent- und Rechtsanwälte PartmbB
(86) Internationale Anmeldenummer: PCT/EP2022/052890
(87) Internationale Veröffentlichungsnummer: WO 2022/179839

(56) Entgegenhaltungen:
- WO-A2-2008/086283
- DE-U1- 20 313 356
- US-A- 4 095 660
- US-A- 4 364 279
- US-A- 4 694 921

## Beschreibung

Die Erfindung betrifft ein Anhängerstützrad mit einer Messeinrichtung und ein Verfahren für die Stützlast eines Anhängerstützrads mit den Merkmalen der unabhängigen Ansprüche.

Aus der Praxis sind Anhängerstützräder für die Deichsel eines abgekuppelten Fahrzeuganhängers in verschiedenen Ausführungen bekannt. Das Anhängerstützrad kann in sich starr oder längenverstellbar sein und kann eine starre oder eine bewegliche, insbesondere federnd ausweichfähige, Radlagerung haben.

Für die Höhe der an einer Fahrzeugkupplung eines Zugfahrzeugs wirkenden Stützlast des angekuppelten Fahrzeuganhängers gibt es gesetzliche Vorgaben, die mit der Art des Zugfahrzeugs variieren können.

Aus der Praxis sind Messeinrichtungen zur Erfassung dieser Stützlast an der Deichsel bekannt, wobei diese vertikale Stützlast auch an einem mit Bodenkontakt ausgefahrenen Anhängerstützrad wirkt.

Aus der DE 203 13 356 U1 und EP 1 510 424 A2 ist eine am Anhängerstützrad angeordnete Messeinrichtung bekannt, die mechanisch den lastabhängigen Ausweichweg der federnden Radlagerung misst und diesen an einer Skala am Anhängerstützrad optisch ablesbar anzeigt. Die Skalenwerte geben den über die Federkennlinie aus dem Ausweichweg ermittelten Stützlastwert an. Diese Messtechnik ist ungenau und empfindlich gegenüber Umwelteinflüssen, wie Korrosion, Verschmutzung und dgl..

Die DE 10 2004 058 829 A1 befasst sich mit einem Anhängerstützrad und einem Drucksensor am Stützrad, der als Dehnmessstreifen ausgebildet und am oberen Schaftende des Stützrads angeordnet ist.

Die DE 699 25 904 T2 betrifft einen Aufnehmer für dynamische Achskräfte und -momente an einem Motorrad bei der Fahrt.

In der DE 196 53 117 C1 sind Laufräder für Sportgeräte angesprochen, wobei ein Radkörper auf einer drehfesten Achse angeordnet ist und Kraftmesser in der Lauffläche des Radkörpers und/oder an einer Achsaufnahme angeordnet sowie als Piezoelemente ausgebildet sind. Sie dienen der zur Messung der Bodenberührung und/oder zur Winkelbestimmung zwischen Aufsetzrichtung des Rades und effektiver Fortbewegungsrichtung bei der Fahrt.

Die DD 279 062 A1 lehrt generell eine Kraftmessachse, die für die Kraft- und Dehnungserfassung ein optisches System aufweist, dass in zentrale Öffnungen der Kraftmessachse integriert ist.

Die EP 0 154 728 A1 betrifft einen industriellen Lastmesser, der zwischen Maschinenteilen eingesetzt wird und der einen Verformungen abbildenden Pin mit endseitigen Sackbohrungen und dort eingesetzten Dehnungsmesselementen aufweist.

Das Dokument US 4 095 660 offenbart eine Messeinrichtung für die Lastmessung an einer Blattfeder eines Lastkraftwagens.

Es ist Aufgabe der vorliegenden Erfindung, eine bessere Messtechnik für die Stützlast einer Anhängerdeichsel bzw. eines Anhängerstützrads aufzuzeigen.

Die Erfindung löst diese Aufgabe mit den Merkmalen in den selbstständigen Ansprüchen.

Die beanspruchte Messtechnik, d.h. die Messeinrichtung und das Messverfahren für die Ermittlung der besagten Stützlast und das mit der Messtechnik ausgerüstete Anhängerstützrad sowie der Fahrzeuganhänger, haben verschiedene Vorteile.

Die Messeinrichtung ist eine eigenständige Einheit, die im Wege der Erstausrüstung an ein Anhängerstützrad herstellerseitig angebaut werden kann, die aber auch an einem vorhandenen Anhängerstützrad nachgerüstet oder umgerüstet werden kann. Die Messeinrichtung kann auch einen drehbaren Radkörper und einen Radträger umfassen. Das mit einer Messeinrichtung ausgestattete Anhängerstützrad kann ebenfalls ein eigenständiges Bauteil sein. Es kann an einem Fahrzeuganhänger als Erstausrüstung vorhanden oder im Wege der Nachrüstung oder Umrüstung ausgetauscht oder umgebaut werden.

Die beanspruchte Messtechnik, d.h. die Messeinrichtung und das Messverfahren, weisen ein am Anhängerstützrad montierbares oder montiertes Messmittel auf, welches einen länglichen Radachszapfen für den Radkörper umfasst, an dem zwischen den Zapfenende ein Lastmesselement angeordnet ist. Der Radachszapfen ist bevorzugt einstückig ausgebildet. Er besteht aus einem belastbaren Material, z.B. Metall, insbesondere Stahl. Der Radachszapfen kann außenseitig eine in Axialrichtung profilierte Kontur haben. Der Radachszapfen kann als z.B. gegossenes oder umgeformtes sowie bevorzugt metallisches Formteil ausgebildet sein.

Die beanspruchte Messtechnik hat den Vorteil, dass die Stützlast an der Krafteinleitung vom Radkörper auf den Radträger und das Anhängerstützrad erfasst werden kann. Der Fahrzeuganhänger ist dabei vom Zugfahrzeug abgekuppelt und das Anhängerstützrad ist mit Bodenkontakt zum Untergrund abgesenkt, wobei die Stützlast (F) am Anhängerstützrad wirkt. Dies ist eine besonders direkte Erfassung, die weniger störanfällig als die vorbekannte Messtechnik ist. Die beanspruchte Messtechnik bietet eine höhere und bessere Genauigkeit der Lasterfassung.

Die gemessene Stützlast kann einem Bediener angezeigt werden, ggf. in Verbindung mit einem Warnsignal bei Überschreiten eines Grenzwerts. Der Bediener kann in geeigneter Weise reagieren, z.B. durch Änderung von Größe und/oder Lage bzw. Verteilung der Anhängerbeladung. Die gemessene Stützlast kann am Anhängerstützrad angezeigt werden. Sie kann auch an entfernte Empfänger zur dortigen Anzeige und ggf. Verarbeitung der Messwerte übermittelt werden. Aus der am Anhängerstützrad gemessenen Stützlast kann ggf. auch auf die Masse bzw. das Gesamtgewicht des Fahrzeuganhängers rückgeschlossen werden.

Das Lastmesselement kann einzeln oder mehrfach vorhanden sein. Es kann lastabhängige Veränderungen des Radachszapfens aufnehmen. Dies können Spannungsänderungen, Verformungen oder andere Arten von Zapfenänderungen sein. Hierfür kann das Lastmesselement in unterschiedlicher Weise ausgebildet sein. In einer bevorzugten Ausführung umfasst das Lastmesselement einen Kraft und/oder Verformung aufnehmenden Sensor, z.B. einen Dehnmessstreifen. Das Lastmesselement kann an geeigneter Stelle am Radachszapfen, z.B. an dessen Mantel, angeordnet sein. Andere mögliche Ausführungen des Lastmesselement betreffen z.B. Piezo-Sensoren oder kapazitive Sensoren oder SAW-Sensoren (Oberflächenwellensensoren) zur Messung von Kraft und/oder Dehnung.

Der Radachszapfen kann einen Stützbereich für den Radkörper und mindestens einen endseitigen Stützbereich für den Radträger aufweisen, wobei an einem axialen Zwischenbereich zwischen den Stützbereichen ein Lastmesselement am Radachszapfen angeordnet ist. Der Radachszapfen kann für eine einseitige Aufnahme oder Abstützung am Radträger ausgebildet sein. In diesem Fall können sich zwei Stützbereiche mit einem Zwischenbereich und einer dortigen Zuordnung des Lastelements ergeben.

In einer bevorzugten Ausführungsform ist der Radachszapfen an beiden stirnseitigen Zapfenenden am Radträger aufgenommen. Er weist dabei einen zentralen Stützbereich für den Radkörper und mehrere, insbesondere zwei, endseitige Stützbereiche für den Radträger auf. Hierbei können sich drei Stützbereiche mit zwei Zwischenbereichen ergeben. An jedem dieser Zwischenbereiche kann ein Lastmesselement am Radachszapfen angeordnet sein.

Der Zwischenbereich kann gegenüber den axial anschließenden Stützbereichen verdünnt sein. Der verdünnte Zwischenbereich ist verformungsgünstig und verbessert die Messgenauigkeit. Die bevorzugt einstückige Ausbildung des Radachszapfens ist hierfür ebenfalls von Vorteil. Der Zwischenbereich kann auch eine Lochung unter Bildung von axialen und bevorzugt parallelen Stegen aufweisen. Die axialen Stege befinden sich in der Einbaulage an der Ober- und Unterseite des Radachszapfens. Der Radachszapfen kann an dem/den Zwischenbereich(en), insbesondere an den Stegen, zumindest an einer Seite eine ebene Oberfläche aufweisen. Hier kann ein Lastmesselement angeordnet sein. Die ebene Oberfläche kann auch als Abflachung an einem ungelochten Zwischenbereich ausgebildet sein. In der Einbaulage ist die ebene Oberfläche bevorzugt horizontal ausgerichtet.

An den Stützbereichen kann der Radachszapfen im wesentlichen zylindrisch ausgebildet sein. Der jeweilige Zwischenbereich muss nicht verdünnt sein. Er kann im wesentlichen die gleiche Umfangskontur wie die Stützbereiche aufweisen. Ein solcher Zwischenbereich kann ggf. eine Abflachung haben. Alternativ sind andere Formen des Radachszapfens und seiner bevorzugt in Axialrichtung profilierten Außenkontur möglich, z.B. eine Quaderform oder eine Mischung von Quader- und Zylinderform.

Auf dem Stützbereich für den Radkörper kann ein Radlagerelement angeordnet sein. Dieses kann z.B. rohrartig, insbesondere als Lagerhülse, ausgestaltet sein. Es bietet eine Drehlagerung und ggf. Führung für den Radkörper. An einem oder beiden stirnseitigen Endbereichen kann der Radachszapfen ein Fixiermittel zur Fixierung am Radträger aufweisen. Das Fixiermittel kann am besagten Stützbereich angeordnet sein. Es kann für eine drehfeste Aufnahme und Abstützung des Radachszapfens am Radträger sorgen.

Die z.B. elektrische oder andere Erfassung der lastabhängigen internen Veränderungen des Radachszapfens ermöglicht eine vielfältige Art der Verarbeitung der Messdaten. Die Messeinrichtung kann eine Auswerteeinheit aufweisen, die mit dem Messmittel, insbesondere dem Lastmesselement, verbindbar oder verbunden ist. Die Auswerteeinheit kann die Messdaten z.B. elektrisch oder elektronisch auswerten. Die Messeinrichtung kann ferner eine Kommunikationseinheit aufweisen, mit der die Messdaten und/oder das Auswerteergebnis nach außen kommuniziert werden können. Die Kommunikation kann leitungsgebunden oder drahtlos, insbesondere per Funk, Bluetooth, W-LAN oder dgl., erfolgen. Die Messeinrichtung kann außerdem eine Energieversorgung umfassen. Dies kann z.B. eine eigene Energieversorgung in Form von Batterien, wiederaufladbaren Akkus oder dgl. sein. Die Energieversorgung ist mit den anderen Komponenten der Messeinrichtung verbindbar oder verbunden. In einer anderen Ausführung kann die Energieversorgung als Anschluss an ein z.B. elektrisches Bordnetz des Fahrzeuganhängers oder in anderer Weise ausgebildet sein.

Die Messeinrichtung kann eine bevorzugt mobile Bedieneinheit und eine Anzeige aufweisen. Die mobile Bedieneinheit kann eine Fernbedienung sein, mit der auch der Messvorgang gestartet und beendet werden kann. Die Fernbedienung kann z.B. ein dediziertes Bediengerät oder eine App für ein Smartphone, Tablet oder einen anderen universellen tragbaren Computer sein. Die App kann z.B. eine Maske für die Anzeige des Messergebnisses und der Stützlast auf einem Monitor des tragbaren Computers generieren. Alternativ oder zusätzlich kann eine Anzeige an einem Armaturenbrett eines Zugfahrzeugs erfolgen. Eine Anzeige kann auch am Anhängerstützrad angeordnet sein. Über die besagte Kommunikationseinheit kann eine vorzugsweise drahtlose Kommunikation mit einer mobilen Bedieneinheit bzw. einer App und einem Zugfahrzeug erfolgen.

Die Messeinrichtung kann an einem Anhängerstützrad auf unterschiedliche Weise angeordnet sein. Die Anordnung der besagten Komponenten ist z.B. an einem oder vorzugsweise mehreren, insbesondere zwei, Trägerarmen des Radträgers möglich. Der oder die Trägerarm(e) können quer oder schräg zu einem Stützschaft des Anhängerstützrads ausgerichtet sein und ggf. hiervon wegragen. Der Radkörper ist dabei seitlich versetzt zum Stützschaft angeordnet. Dies ist günstig für eine bewegliche Radlagerung. Der oder die Trägerarm(e) können alternativ fluchtend zum Stützschaft angeordnet sein

Ein z.B. gabelartiger Radträger ermöglicht eine geschützte Anordnung der Auswerteeinheit und/oder der Kommunikationseinheit und/oder der Energieversorgung an der Innenseite der Trägerarme des Radträgers. Ein gabelartiger Radträger ist auch vorteilhaft für eine bewegliche Radlagerung, bei der der Radkörper federnd ausweichen oder ggf. auch platzsparend hochgeschwenkt werden kann.

Für die Anordnung des Radträgers mit dem Radachszapfen und dem Radkörper am Anhängerstützrad gibt es verschiedene Möglichkeiten. Der Radträger kann starr oder beweglich am Stützschaft oder an einer dortigen Längenverstellung des Anhängerstützrads montiert sein. Besonders günstig ist eine federnd ausweichfähig bewegliche Anordnung des Radträgers. Dies verbessert den Komfort beim Bewegen des Fahrzeuganhängers mit ausgefahrenem Anhängerstützrad. Eine Federung verringert auch die im Rangierbetrieb auf die Messeinrichtung einwirkenden äußeren Belastungen. Andererseits ist die Messtechnik unabhängig von einer eventuellen federnden Radlagerung und wird durch diese in ihrer Messgenauigkeit nicht negativ beeinträchtigt.

Die Messeinrichtung kann herstellerseitig und/oder ggf. nach Anbau an einem Anhängerstützrad kalibriert werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: Eine Seitenansicht eines Fahrzeuganhängers in Ankuppelstellung und ein Anhängerstützrad mit einer Messeinrichtung für die Stützlast,
- Figur 2:: eine perspektivische Ansicht des Anhängerstützrads mit der Messeinrichtung,
- Figur 3:: eine Seitenansicht des Anhängerstützrads von Figur 2,
- Figur 4:: einen Schnitt durch das Anhängerstützrad gemäß Schnittlinie IV-IV von Figur 3,
- Figur 5:: einen Längsschnitt durch das Anhängerstützrad gemäß Schnittlinie V-V von Figur 4,
- Figur 6:: eine Explosionszeichnung des Anhängerstützrads von Figur 2,
- Figur 7:: eine geschnittene und perspektivische Detailansicht der Messeinrichtung,
- Figur 8:: ein vergrößerter Längsschnitt durch einen Radachszapfen der Messeinrichtung und einen Radkörper,
- Figur 9:: eine perspektivische Ansicht eines verformten Radachszapfens und
- Figur 10:: eine Darstellung des Kraftflusses an dem mit Bodenkontakt ausgefahrenen Anhängerstützrad.

Die Erfindung betrifft ein Anhängerstützrad mit einer Messeinrichtung (2) und ein Messverfahren für die Stützlast eines Anhängerstützrads (7). Die Erfindung betrifft ferner das mit einer Messeinrichtung (2) ausgerüstete Anhängerstützrad (7) und einen mit dem Anhängerstützrad (7) nebst Messeinrichtung (2) ausgestatteten Fahrzeuganhänger (1).

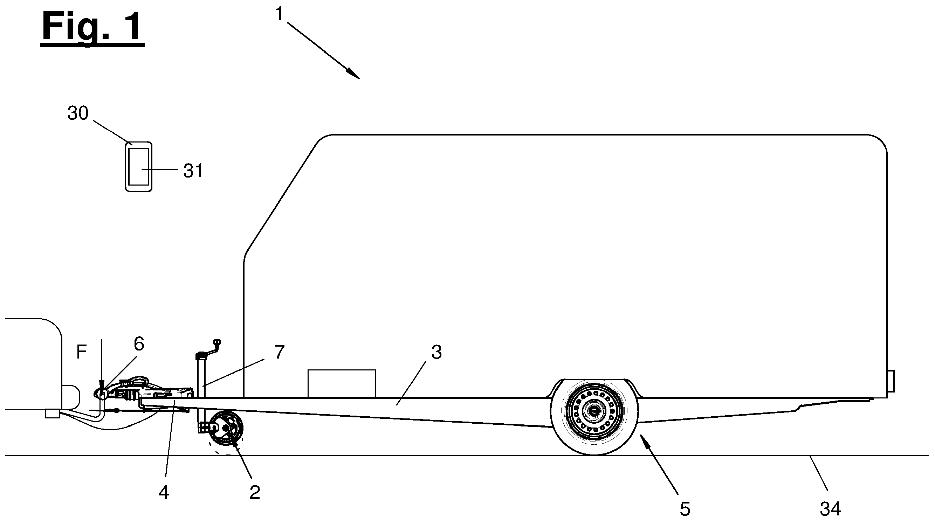

Figur 1 zeigt einen Fahrzeuganhänger (1) in Seitenansicht und in Ankuppelstellung an einem angedeuteten Zugfahrzeug. Der Fahrzeuganhänger (1) ist ein straßentaugliches Fahrzeug. Er weist ein Chassis (3) mit einer frontseitigen Deichsel (4) und mit einer am vorderen Deichselende angeordneten Anhängerkupplung (6) auf. Die Deichsel (4) ist bevorzugt eine starre Deichsel. Sie kann als Rohrdeichsel oder als V-Deichsel ausgestaltet sein. Die Anhängerkupplung (6) ist z.B. als Kugelkopfkupplung gestaltet. Das Chassis (3) weist parallele Längsträger und ggf. auch Querträger auf. Am Chassis (3) ist eine Achsanordnung (5) angeordnet, die eine oder mehrere Achsen mit beidseitigen Anhängerrädern umfasst. In Figur 1 ist eine Einzelachse dargestellt. Alternativ sind mehrere Achsen, z.B. in Form einer Tandemachse, möglich. Auf dem Chassis (3) ist ein Aufbau von beliebiger Art angeordnet. Am Chassis (3) oder an anderer Stelle kann auch eine anhängereigene Batterie oder ein anderer Energiespeicher angeordnet sein. Der Energiespeicher kann im Gespannbetrieb vom Bordnetz des Zugfahrzeugs oder in abgekuppelter Stellung über eine Steckdose geladen werden. An der Deichsel (4) ist ein Anhängerstützrad (7) über einen geeigneten Beschlag montiert. Für den in Figur 1 gezeigten Gespannbetrieb in Ankuppelstellung an einem Zugfahrzeug ist das Anhängerstützrad (7) angehoben. Die abgesenkte Stellung mit Kontakt zu einem Untergrund (34) ist gestrichelt dargestellt.

In der gezeigten Ankuppelstellung liegt die Anhängerkupplung (6) mit einer vertikalen Stützlast oder Stützkraft (F) auf der Fahrzeugkupplung des Zugfahrzeugs auf. Die Höhe der Stützlast (F) ist durch gesetzliche Vorgaben begrenzt. Einerseits gibt es eine Grenze für die maximale Stützlast der Anhängerkupplung (6) und des Anhängers (1). Ferner gibt es eine maximale Stützlast des motorisierten Zugfahrzeugs, die mit der Art des Zugfahrzeugs bzw. Kraftfahrzeugs variieren kann.

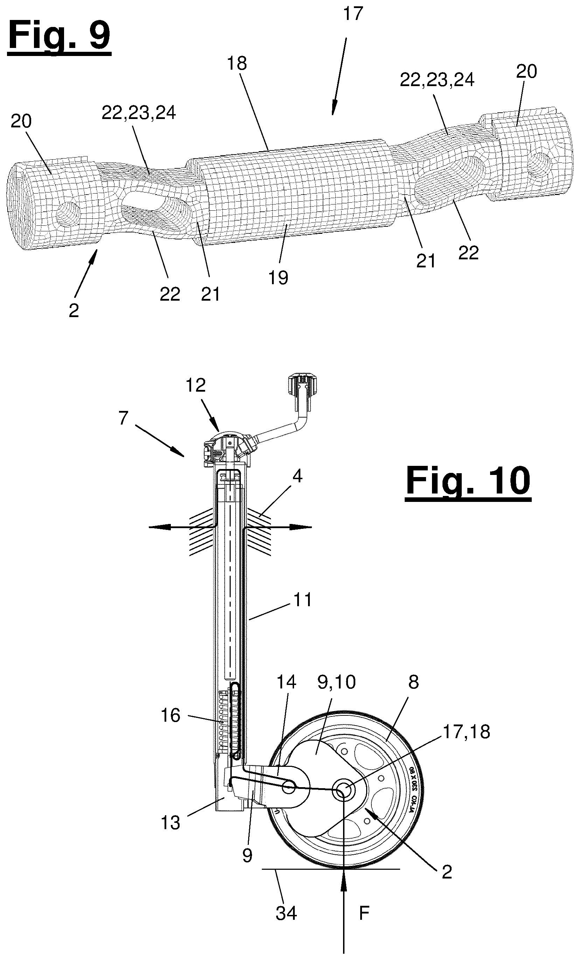

Die Stützlast (F) wirkt in der angekuppelten Stellung an der Deichsel (4) an der Anhängerkupplung (6). Wenn der Fahrzeuganhänger (1) vom Zugfahrzeug abgekuppelt ist und das Anhängerstützrad (7) mit Bodenkontakt zum Untergrund (4) abgesenkt ist, wirkt die Stützlast (F) am Anhängerstützrad (7). Figur 10 verdeutlicht den dabei bestehenden Kraftfluss durch das Anhängerstützrad (7) von der Kontaktstelle am Untergrund (34) bis zur Montagestelle an der Deichsel (4).

Das Stützrad (7) ist mit einer Messeinrichtung (2) für die Stützlast ausgestattet. Die Messeinrichtung (2) kann bei der Herstellung des Anhängerstützrads (7) als Erstausrüstung eingebaut werden. Sie kann alternativ an einem bestehenden Anhängerstützrad (7) nachgerüstet oder umgerüstet werden. Ferner kann ein bestehendes Anhängerstützrad des Fahrzeuganhängers (1) gegen ein erfindungsgemäßes Anhängerstützrad (7) mit einer Messeinrichtung (2) getauscht werden. Die Montagebeschläge sind üblicherweise genormt. Sie erlauben auch die besagte Höhenverstellung des Anhängerstützrads (7).

Die Messeinrichtung (2) umfasst ein Messmittel (17) sowie eine Anzeige (31) für die gemessene Stützlast. Die Anzeige (31) kann am Anhängerstützrad (7) angeordnet sein. Sie kann alternativ oder zusätzlich an einer mobilen und bevorzugt tragbaren Bedieneinheit (30) angeordnet sein.

Die mobile Bedieneinheit (30) kann ein dediziertes Bediengerät sein. Alternativ kann die Bedieneinheit (30) ein universeller tragbarer Computer aus dem Consumer-Bereich, z.B. ein Smartphone, ein Tablet oder dgl. sein. Die Messeinrichtung (2) umfasst in diesem Fall eine App, die auf der Bedieneinheit (30) aufgespielt sowie gespeichert werden kann und die auf deren Monitor, z.B. Touchscreen, eine Anzeige (31) generiert. Dies kann z.B. eine Maske zur Darstellung des vom Messmittel (17) gemeldeten Messwerts der Stützlast sein.

Die mobile Bedieneinheit (30) kann ferner Bedienmittel zum Steuern der Messeinrichtung (2), insbesondere zum Starten und Beenden des ansonsten bevorzugt automatischen Messvorgangs, beinhalten. Die betreffende Steuertechnik kann in der Auswerteeinheit (27) angeordnet sein. Die Bedienmittel können auch von der App am Monitor des universellen tragbaren Computers generiert werden.

Das Anhängerstützrad (7) weist einen drehbaren Radkörper (8) und einen Radträger (9) sowie einen Stützschaft (11) auf. Der Stützschaft (11) kann über den Montagebeschlag an der Deichsel (3) oder an anderer geeigneter Stelle des Fahrzeuganhängers (1) montiert und zumindest temporär, z.B. klemmend, befestigt werden. Der Stützschaft (11) kann als gerades Rohr oder in anderer Weise ausgebildet sein. Das Anhängerstützrad (7) kann eine Längenverstellung (12) aufweisen, die z.B. von einer Kurbel am oberen Schaftende und von einem axial verstellbaren Stellkörper (13) unter Zwischenschaltung eines Spindeltriebs oder dgl. gebildet wird. Mit der Kurbel wird z.B. eine Getriebespindel gedreht, die eine mit dem Stellkörper (13) verbundene Spindelmutter auf und ab bewegt. Der Stellkörper (13) ist drehfest und axial verstellbar im Stützschaft (11) gehalten und geführt. Der Stellkörper (13) kann ebenfalls als gerades Rohr oder in anderer Weise ausgebildet sein.

Der Radträger (9) kann mit der Längenverstellung (12), insbesondere mit dem Stellkörper (13) starr verbunden sein. Beim Fehlen einer Längenverstellung (12) kann der Radträger (9) mit dem Stützschaft (11) starr verbunden sein.

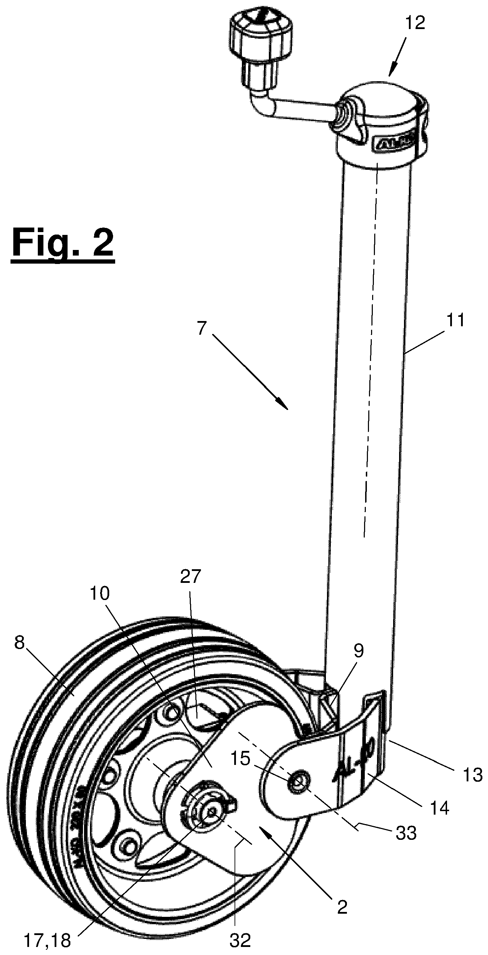

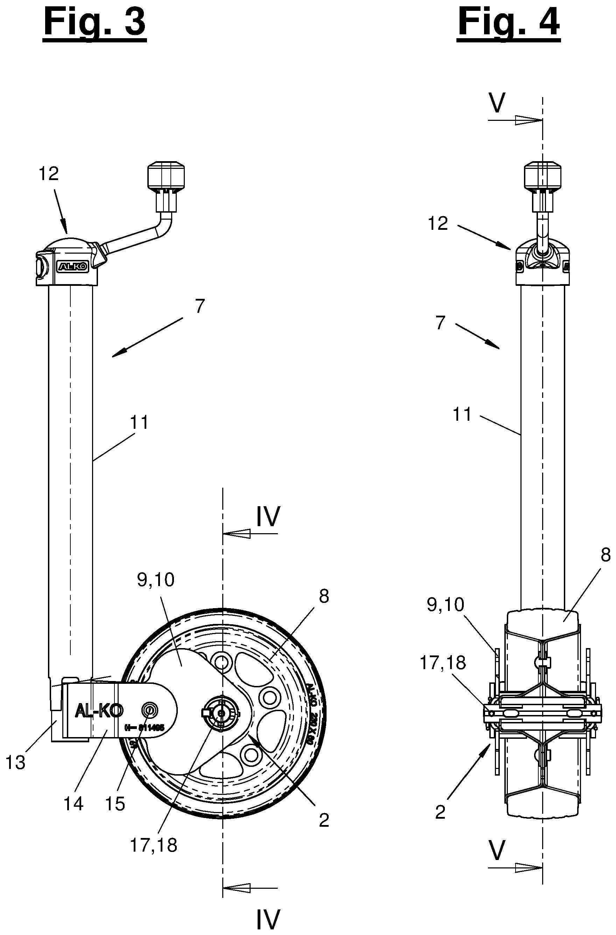

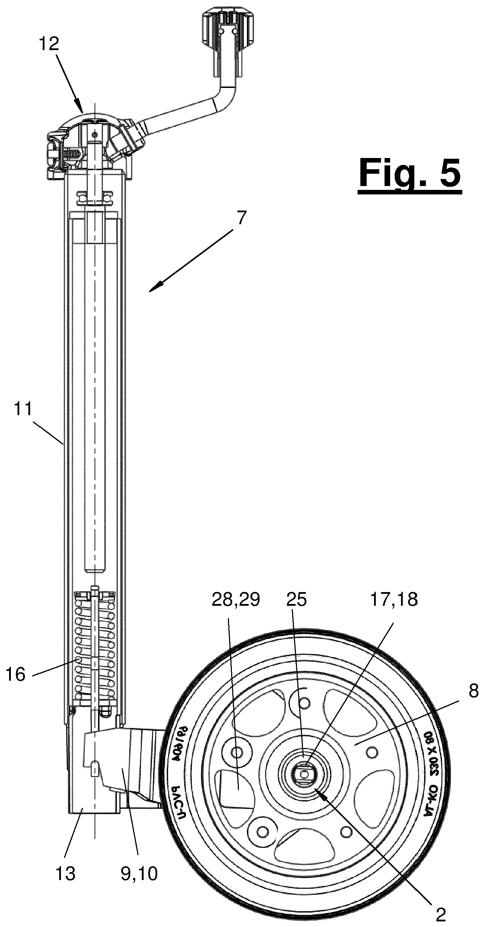

In den Figuren 2 bis 10 ist eine andere Ausführungsform einer beweglichen Verbindung des Radträgers (9) mit der Längenverstellung (12) bzw. dem Stellkörper (13) dargestellt. Der Radträger (9) ist dabei über ein Schwenklager (15) mit horizontaler Schwenkachse (33) mit einem Ausleger (14) verbunden, welcher seinerseits am unteren Ende des Stellkörpers (13) befestigt ist. In einer anderen und nicht dargestellten Ausführung kann der Ausleger (14) auch am Stützschaft (11) befestigt sein.

Der Radträger (9) weist mindestens einen, vorzugsweise mehrere, insbesondere zwei, Trägerarme (10) auf. Der Radträger (9) und der oder die Trägerarme (10) erstrecken sich quer oder schräg zum Stützschaft (11). Sie distanzieren den Radkörper (8) seitlich vom Stützschaft (11). Der Ausleger (14) erstreckt sich ebenfalls quer oder schräg zum Stützschaft (11) bzw. zum Stellkörper (13).

Der Radträger (9) hat in der gezeigten Ausführungsform eine gabelartige Form mit zwei nach vorn abstehenden und seitlich beabstandeten parallelen Trägerarmen (10). Am rückwärtigen Ende greift der Radträger (9) mit einem Trägeransatz zwischen dem Ausleger (14) in den Stützschaft (11) und den innenliegenden Stellkörper (13). Der Trägeransatz ist mit einer im Stellkörper (13) befindlichen Feder (16) verbunden und stützt sich an dieser ab. Unter Einwirkung der Stützlast (F) im ausgefahrenen Zustand können der Radträger (9) und der Radkörper (8) über das Schwenklager (15) nach oben schwenken, wobei die abwärts gerichtete Schwenkbewegung am Trägeransatz über die Feder (16) federelastisch abgestützt ist. Die Feder (16) drückt den abgehobenen und entlasteten Radkörper (8) wieder in die Ausgangsstellung.

Das Messmittel (17) ist am Anhängerstützrad (7) montierbar oder montiert. Das Messmittel (17) umfasst einen länglichen, bevorzugt einstückigen Radachszapfen (18) für den drehbaren Radkörper (8), wobei am Radachszapfen (18) ein Lastmesselement (23) an dem Bereich zwischen den stirnseitigen Zapfenenden angeordnet ist. Der Radachszapfen (18) hat bevorzugt eine in seiner Axialrichtung profilierte Außenkontur, wobei der Zapfenbereich mit dem Lastmesselement (23) eine anderes geformte Außenkontur als andere Zapfenbereiche, insbesondere als die Zapfenenden, aufweist. Das Lastmesselement (23) kann einzeln oder mehrfach vorhanden sein. Es kann jeweils aus einem oder mehreren Teilen bestehen. In den gezeigten Ausführungsformen ist das Lastmesselement (23) am Mantel des Radachszapfens (16) angeordnet. Der Radachszapfen (18) besteht z.B. aus Metall, insbesondere Stahl. Er ist z.B. als gegossenes und/oder umgeformtes Formteil ausgebildet.

Das Lastmesselement (23) umfasst bevorzugt einen Kraft und/oder Verformung aufnehmenden Sensor (24). Dieser weist z.B. einen elektrischen oder optischen oder laserstrukturierten Dehnmessstreifen auf. Zudem kann der Sensor (24) eine optische Erfassungseinheit, z.B. Lasermesseinheit, umfassen.

Die Messeinrichtung (2) umfasst eine Auswerteeinheit (27), die mit dem Lastmesselement (23) signaltechnisch und ggf. energietechnisch verbunden ist. Die Auswerteeinheit (27) bestimmt aus den gemeldeten Messwerten des Lastmesselements (23) die am Anhängerstützrad (7) wirkende Stützlast oder Stützkraft (F) auf Basis einer vorherigen Kalibrierung.

Die Messeinrichtung (2) kann ferner eine Kommunikationseinheit (28) und/oder eine Energieversorgung (29) umfassen. Diese können mit der Auswerteeinheit (27) verbunden sein. Die Energieversorgung (29) ist z.B. als elektrische Batterieanordnung oder als wiederaufladbarer elektrischer Akku ausgebildet. Sie versorgt die Komponenten der Messeinrichtung (2) mit elektrischer Energie. Die Kommunikationseinheit (28) kann eine Kommunikationsverbindung der Auswerteeinheit (27) mit der Anzeige (31) und ggf. einem anderen Empfänger herstellen. Die Kommunikationsverbindung kann leitungsgebunden oder bevorzugt drahtlos sein. Insbesondere kann einen Kommunikationsverbindung mit der mobilen Bedieneinheit (30) hergestellt werden, z.B. über Funk, Bluetooth, Infrarotlicht oder dgl..

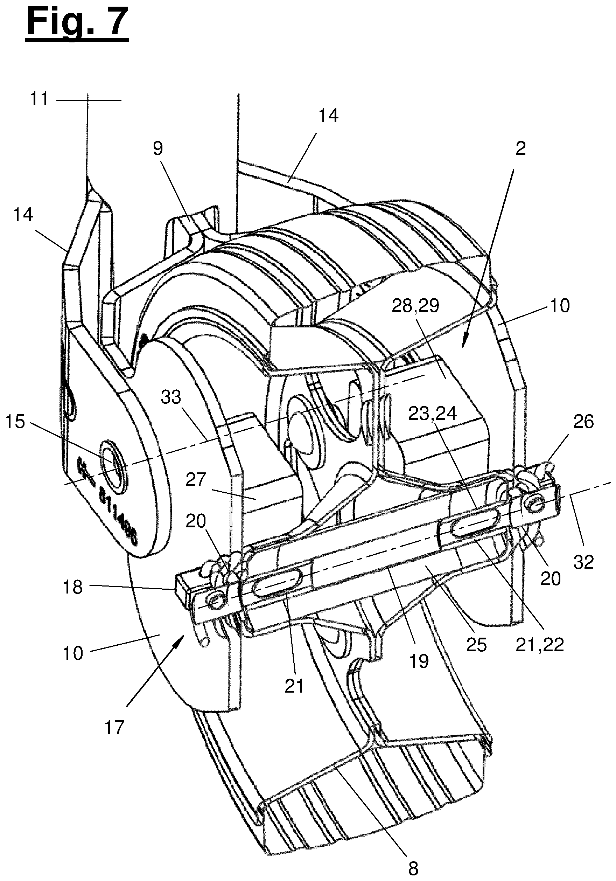

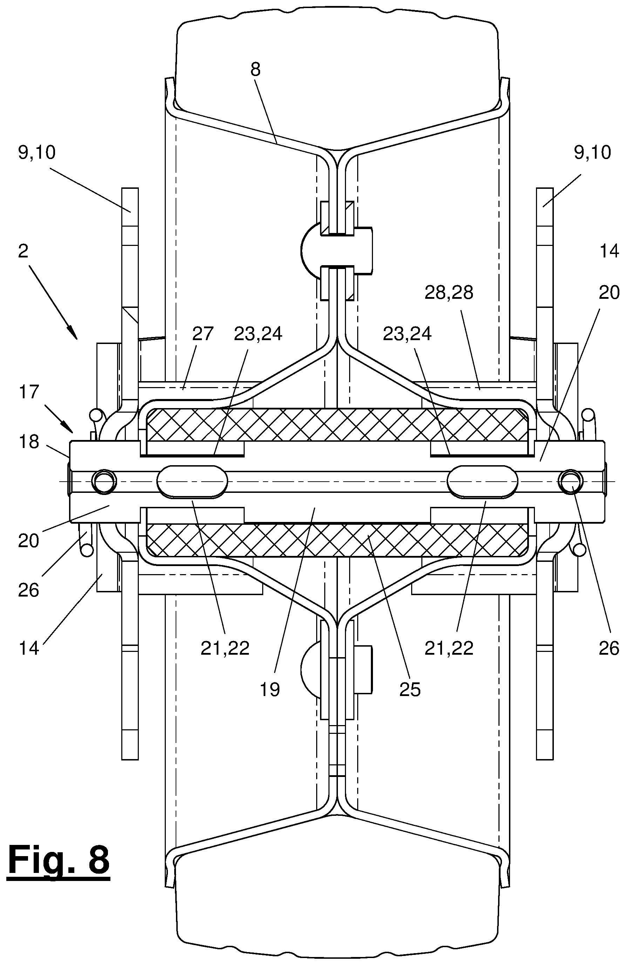

Das Messmittel (17) und der Radachszapfen (18) sind in den Schnittdarstellungen von Figur 7 und 8 vergrößert dargestellt. Figur 9 zeigt den Radachszapfen (18) in einem unter Einwirkung der Stützlast (F) verformten Zustand.

Der bevorzugt gerade Radachszapfen (18) weist einen zentralen Stützbereich (19) für den Radkörper (8) und zwei endseitige Stützbereiche (20) für den Radträger (9) bzw. die Trägerarme (10) auf. Am zentralen Stützbereich (19) ist der Radkörper (8) im Nabenbereich unter Zwischenschaltung eines Radlagerelements (25), z.B. einer Lagerhülse, drehbar auf dem Radachszapfen (18) aufgenommen, geführt und abgestützt. An den endseitigen Stützbereichen (20) ist der Radachszapfen (18) am Radträger (9) und an dessen Trägerarmen (10) aufgenommen und abgestützt. Diese Aufnahme und Abstützung sind vorzugsweise drehfest. Mittels einer Fixierung (26) kann der Radachszapfen (18) an den Trägerarmen (10) positioniert und fixiert werden.

An einem axialen Zwischenbereich (21) zwischen den Stützbereichen (19,20) ist ein Lastmesselement (23) am Radachszapfen (18) angeordnet. In der gezeigten Ausführungsform mit der beidseitigen Radzapfenaufnahme sind z.B. zwei Zwischenbereiche (21) mit jeweils einem Lastelement (23) vorhanden.

In einer anderen und nicht dargestellten Ausführungsform kann ein Radachszapfen (18) einseitig am Radträger (9) und an einem Trägerarm (10) aufgenommen und abgestützt sein. In diesem Fall gibt es z.B. zwei Stützbereiche (19,20) und einen einzelnen Zwischenbereich (21) mit einem Lastmesselement (23).

Der jeweilige Zwischenbereich (21) ist z.B. gegenüber den axial anschließenden Stützbereichen (19,20) verdünnt. Der jeweilige Zwischenbereich (21) kann ferner eine Lochung aufweisen, durch die axiale Stege (22) gebildet werden, die bevorzugt parallel zueinander ausgerichtet sind. Die Lochung und die axialen Stege (22) sind in der Einbaustellung des Radachszapfens (18) horizontal ausgerichtet. Der jeweilige Zwischenbereich (21) weist zumindest an einer Seite eine ebene Oberfläche auf, an der ein Lastmesselement (23) angeordnet und in geeigneter Weise befestigt sein kann. In der gezeigten Ausführungsform ist die ebene Oberfläche an zumindest einer Seite von mindestens einem der Stege (22) vorhanden. Beispielsweise ist die ebene Oberfläche an der in Einbaustellung nach oben weisenden Oberseite des oberen Stegs (22) angeordnet.

Der Radachszapfen (18) hat ansonsten an den Stützbereichen (19,20) eine bevorzugt zylindrische Form. Die Seitenflächen des jeweiligen Zwischenbereichs (21) können ebenfalls gerundet ausgebildet sein. An den stirnseitigen Stützbereichen (20) kann sich ebenfalls eine Lochung oder eine Nut für eine drehfeste Aufnahme am jeweiligen Trägerarm (10) und für das Fixiermittel (26) befinden.

Bei dem mit Bodenkontakt ausgefahrenen Anhängerstützrad (7) wirkt an der Kontaktstelle mit dem Untergrund (34) die Stützlast (F) bzw. die Reaktionskraft am Radkörper (8) ein. Die Kraft wird über die Stützfläche (19) auf den Radachszapfen (18) geleitet, der andererseits an der oder den stirnseitigen Stützbereichen (20) am Radträger (9) gehalten und abgestützt ist. Unter dieser Krafteinwirkung verändert sich der Radachszapfen (18). Die Veränderung äußert sich z.B. in einer Spannungsänderungen und ggf. auch in einer Verformung des Radachszapfens (18), die mit dem Lastmesselement (23) aufgenommen werden können. Eine Verformung und Spannungsänderung äußert sich besonders deutlich am jeweiligen verjüngten Zwischenbereich (21), insbesondere an den durch die Lochung verdünnten Stegen (22).

Der jeweilige Sensor (24), insbesondere Dehnmessstreifen, kann eine solche Spannungsänderung und Verformung gut erfassen. Diese Art der Messtechnik eignet sich besonders für Fahrzeuganhänger (1) mit relativ niedriger zulässiger Stützlast (F) von z.B. ca. 1.000 N.

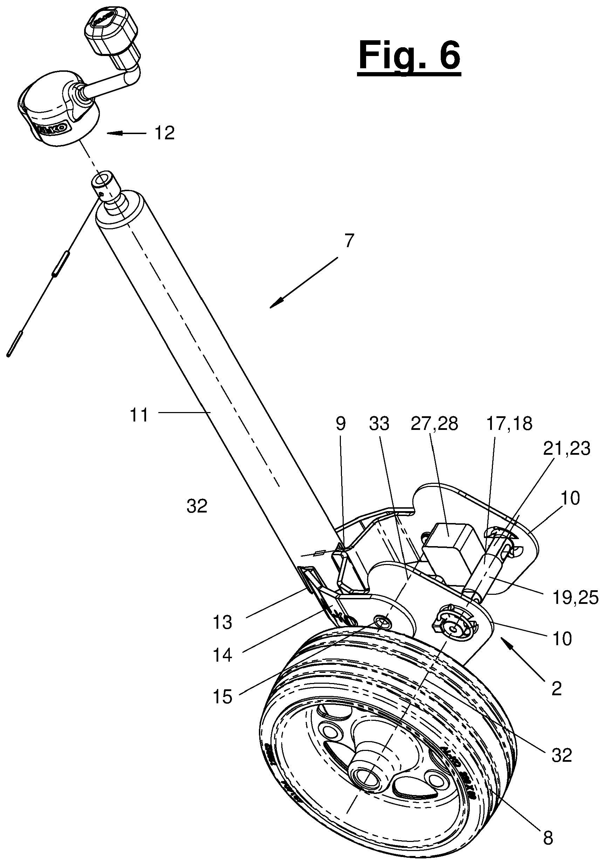

Wie Figur 6 bis 8 verdeutlichen, sind die Auswerteeinheit (27), die Kommunikationseinheit (28) und die Energieversorgung (29) an der Innenseite der Trägerarme (10) angeordnet. Sie können in den Radkörper (8) seitlich hineinragen. Der Radkörper (8) kann hierfür eine breite Lauffläche und eine eingezogene Felge mit einem dünnen zentralen Felgensteg aufweisen.

Wie Figur 6 und 7 verdeutlichen, können die Radachse (32) des Radachszapfens (18) und des Radkörpers (8) sowie die Schwenkachse (33) des Schwenklagers (15) parallel ausgerichtet sein. Sie können sich in Einbaustellung horizontal erstrecken.

Abwandlungen der gezeigten und beschriebenen Ausführungsformen sind in verschiedener Weise möglich. Insbesondere sind andere Ausgestaltungen und Messverfahren des Lastmesselements (22) möglich. Das Lastmesselement (2) ist bevorzugt direkt am Radachszapfen (18) angeordnet. Es kann alternativ in geringer Distanz zum Radachszapfen (18) angeordnet sein. Es kann dabei Zapfenänderungen unter Belastung, z.B. Verformungen, Spannungsänderungen oder dgl., kontaktierend oder berührungslos detektieren, z.B. optisch, kapazitiv, induktiv oder dgl. Derartige Zapfenänderungen können auch zu einer detektierbaren Änderung von Oberflächeneigenschaften des Radachszapfens (18) führen.

Alternativ oder zusätzlich zur gezeigten federnden Radlagerung ist auch eine schwenkbare Radlagerung möglich. Diese bewirkt beim Heben des Stellkörpers (13) über einen Anschlag oder dgl. eine automatische Schwenkbewegung des Radkörpers (8) nach oben. Hierdurch kann Bodenfreiheit gewonnen werden. Ferner können die Merkmale der vorbeschriebenen Ausführungsformen und der genannten Varianten im Rahmen der Ansprüche in beliebiger Weise miteinander kombiniert werden.

### BEZUGSZEICHENLISTE

- 1: Fahrzeuganhänger
- 2: Messeinrichtung für Stützlast
- 3: Chassis
- 4: Deichsel
- 5: Achsanordnung
- 6: Anhängerkupplung
- 7: Anhängerstützrad
- 8: Radkörper
- 9: Radträger
- 10: Trägerarm
- 11: Stützschaft
- 12: Längenverstellung
- 13: Stellkörper, Stellrohr
- 14: Ausleger
- 15: Schwenklager
- 16: Feder
- 17: Messmittel
- 18: Radachszapfen
- 19: Stützbereich
- 20: Stützbereich
- 21: Zwischenbereich, Zapfenbereich verdünnt
- 22: Steg
- 23: Lastmesselement
- 24: Dehnmessstreifen
- 25: Radlagerelement, Lagerbuchse
- 26: Fixiermittel
- 27: Auswerteeinheit
- 28: Kommunikationseinheit
- 29: Energieversorgung
- 30: Bedieneinheit
- 31: Anzeige
- 32: Radachse
- 33: Schwenkachse
- 34: Untergrund

## Patentansprüche

1. Anhängerstützrad mit einer Messeinrichtung (2) für die am Anhängerstützrad (7) wirkende Stützlast, wobei das Anhängerstützrad (7) einen drehbaren Radkörper (8) und einen Radträger (9) aufweist, **dadurch gekennzeichnet, dass** die Messeinrichtung (2) ein am Anhängerstützrad (7) montiertes Messmittel (17) aufweist, wobei das Messmittel (17) einen länglichen Radachszapfen (18) für den Radkörper (8) umfasst, an dem zwischen den Zapfenende ein Lastmesselement (23) angeordnet ist.

2. Anhängerstützrad nach Anspruch 1, **dadurch gekennzeichnet, dass** das Lastmesselement (23) am Mantel des Radachszapfens (18) angeordnet ist und das Lastmesselement (23) bevorzugt einen Kraft und/oder Verformung aufnehmenden Sensor (24), insbesondere einen Dehnmessstreifen, umfasst.

3. Anhängerstützrad nach Anspruch 1 oder 2, **dadurch gekennzeichnet, dass** der Radachszapfen (18) einen Stützbereich (19) für den Radkörper (8) und mindestens einen endseitigen Stützbereich (20) für den Radträger (9) aufweist, wobei an einem axialen Zwischenbereich (21) zwischen den Stützbereichen (19,20) ein Lastmesselement (23) am Radachszapfen (18) angeordnet ist.

4. Anhängerstützrad nach Anspruch 3, **dadurch gekennzeichnet, dass** der Zwischenbereich (21) gegenüber den anschließenden Stützbereichen (19,20) abgeflacht und/oder verdünnt ist, wobei bevorzugt der Zwischenbereich (21) eine Lochung unter Bildung von bevorzugt parallelen axialen Stegen (22) aufweist.

5. Anhängerstützrad nach einem der Ansprüche 1 bis 4, **dadurch gekennzeichnet, dass** der Radträger (9) mindestens einen Trägerarm (10) aufweist, der den Radachszapfen (18) an einem endseitigen Stützbereich (20) aufnimmt, wobei bevorzugt der Radachszapfen (18) an dem oder den Trägerarm(en) (10) starr aufgenommen und mit einem Fixiermittel (26) drehfest montiert ist.

6. Anhängerstützrad nach Anspruch 3, 4 oder 5, **dadurch gekennzeichnet, dass** der Radkörper (8) mit einem Radlagerelement (25) drehbar auf dem Stützbereich (19) des Radachszapfen (18) angeordnet ist.

7. Anhängerstützrad nach einem der Ansprüche 1 bis 6, **dadurch gekennzeichnet, dass** die Messeinrichtung (2) eine mit dem Messmittel (17) verbundene Auswerteeinheit (27) und bevorzugt eine Kommunikationseinheit (28) und bevorzugt eine Energieversorgung (29) aufweist, wobei bevorzugt die Auswerteeinheit (27) und/oder die Kommunikationseinheit (28) und/oder die Energieversorgung (29) am Radträger (9) angeordnet ist/sind.

8. Anhängerstützrad nach einem der Ansprüche 1 bis 7, **dadurch gekennzeichnet, dass** die Messeinrichtung (2) eine bevorzugt mobile Bedieneinheit (30) und eine Anzeige (31) aufweist.

9. Anhängerstützrad nach einem der Ansprüche 1 bis 8, **dadurch gekennzeichnet, dass** der Radträger (9) an einem Stützschaft (11) oder an einer Längenverstellung (12) des Anhängerstützrads (7) starr oder beweglich, insbesondere federnd ausweichend beweglich, montiert ist, wobei bevorzugt der Radträger (9) quer oder schräg zum Stützschaft (11) ausgerichtet ist.

10. Anhängerstützrad nach Anspruch 9, **dadurch gekennzeichnet, dass** der Radträger (9) an einem mit dem Stützschaft (11) oder der Längenverstellung (12) verbundenen Ausleger (14) über ein Schwenklager (15) drehbeweglich gelagert und an einer Feder (16) am Stützschaft (11) oder an der Längenverstellung (12) abgestützt ist.

11. Fahrzeuganhänger mit einem Chassis (3), einer Achsanordnung (5) mit Anhängerrädern, einer Deichsel (4), einer Anhängerkupplung (6) am Deichselende und einem Anhängerstützrad (7) mit einer Messeinrichtung (2) für die am Anhängerstützrad (7) wirkende Stützlast, wobei das Anhängerstützrad (7) einen drehbaren Radkörper (8) und einen Radträger (9) aufweist, **dadurch gekennzeichnet, dass** das Anhängerstützrad (7) mit der Messeinrichtung (2) nach einem der Ansprüche 1 bis 10 ausgebildet ist.

12. Verfahren zur Ermittlung einer Stützlast eines Anhängerstützrads (7) mit einer Messeinrichtung (2), wobei das Anhängerstützrad (7) mit einem drehbaren Radkörper (8) und mit einem Radträger (9) ausgerüstet ist und die Messeinrichtung (2) ein am Anhängerstützrad (7) montierbares oder montiertes Messmittel (17) aufweist, **dadurch gekennzeichnet, dass** die Stützlast mit einem Messmittel (17) ermittelt wird, das einen länglichen Radachszapfen (18) für den Radkörper (8) umfasst, an dem zwischen den Zapfenende ein Lastmesselement (23) angeordnet ist.

13. Verfahren nach Anspruch 12, **dadurch gekennzeichnet, dass** die Messdaten des Messmittels (17) mit einer verbundenen Auswerteeinheit (27) ausgewertet werden, z.B. elektrisch oder elektronisch, wobei bevorzugt die Messeinrichtung (2) die Messdaten des Messmittels (17) und/oder ein Auswerteergebnis der Auswerteeinheit (27) mittels einer Kommunikationseinheit (28) nach außen bevorzugt drahtlos kommuniziert.

14. Verfahren nach Anspruch 12 oder 13, **dadurch gekennzeichnet, dass** die Messeinrichtung (2) mit einer bevorzugt mobilen Bedieneinheit (30) bedient wird, die eine Anzeige (31) aufweist, wobei bevorzugt mit der mobilen Bedieneinheit (30) der Messvorgang gestartet und beendet wird.

15. Verfahren nach Anspruch 13 oder 14 **dadurch gekennzeichnet, dass** die Messeinrichtung (2) mit einem dedizierten Bediengerät oder mit einer App für ein Smartphone, Tablet oder einen anderen universellen tragbaren Computer bedient wird, wobei bevorzugt die App eine Maske für die Anzeige des Messergebnisses und der Stützlast auf einem Monitor des tragbaren Computers generiert und/oder eine Anzeige des Messergebnisses und der Stützlast an einem Armaturenbrett eines Zugfahrzeugs erfolgt.

## Claims

1. Trailer support wheel having a measuring device (2) for the tongue load acting on the trailer support wheel (7), wherein the trailer support wheel (7) has a rotatable wheel body (8) and a wheel carrier (9), **characterized in that** the measuring device (2) has a measuring means (17) mounted on the trailer support wheel (7), wherein the measuring means (17) comprises an elongate wheel axle journal (18) for the wheel body (8), on which a load measuring element (23) is arranged between the journal ends.

2. Trailer support wheel according to Claim 1, **characterized in that** the load measuring element (23) is arranged on the casing of the wheel axle journal (18) and the load measuring element (23) preferably comprises a force- and/or deformation-recording sensor (24), in particular a strain gauge.

3. Trailer support wheel according to Claim 1 or 2, **characterized in that** the wheel axle journal (18) has a support region (19) for the wheel body (8) and at least one end-side support region (20) for the wheel carrier (9), wherein a load measuring element (23) is arranged on the wheel axle journal (18) at an axial intermediate region (21) between the support regions (19, 20).

4. Trailer support wheel according to Claim 3, **characterized in that** the intermediate region (21) is flattened and/or thinned in relation to the adjoining support regions (19, 20), wherein preferably the intermediate region (21) is perforated so as to form preferably parallel axial webs (22).

5. Trailer support wheel according to any of Claims 1 to 4, **characterized in that** the wheel carrier (9) has at least one carrier arm (10), which receives the wheel axle journal (18) at an end-side support region (20), wherein preferably the wheel axle journal (18) is rigidly received on the carrier arm(s) (10) and mounted in a rotationally fixed manner using a fixing means (26).

6. Trailer support wheel according to Claim 3, 4 or 5, **characterized in that** the wheel body (8) is arranged rotatably on the support region (19) of the wheel axle journal (18) using a wheel bearing element (25).

7. Trailer support wheel according to any of Claims 1 to 6, **characterized in that** that the measuring device (2) has an evaluation unit (27), which is connected to the measuring means (17), and preferably a communication unit (28) and preferably a power supply (29), wherein preferably the evaluation unit (27) and/or the communication unit (28) and/or the power supply (29) are/is arranged on the wheel carrier (9).

8. Trailer support wheel according to any of Claims 1 to 7, **characterized in that** the measuring device (2) has a preferably mobile operating unit (30) and a display (31).

9. Trailer support wheel according to any of Claims 1 to 8, **characterized in that** the wheel carrier (9) is rigidly or movably, in particular resiliently deflectingly movably, mounted on a support shaft (11) or on a length adjustment means (12) of the trailer support wheel (7), wherein preferably the wheel carrier (9) is oriented transversely or obliquely in relation to the support shaft (11).

10. Trailer support wheel according to Claim 9, **characterized in that** the wheel carrier (9) is rotatably mounted via a pivot bearing (15) on a boom (14) connected to the support shaft (11) or the length adjustment means (12) and is supported on a spring (16) on the support shaft (11) or on the length adjustment means (12).

11. Vehicle trailer comprising a chassis (3), an axle arrangement (5) with trailer wheels, a drawbar (4), a trailer coupling (6) at the end of the drawbar and a trailer support wheel (7) having a measuring device (2) for the tongue load acting on the trailer support wheel (7), wherein the trailer support wheel (7) has a rotatable wheel body (8) and a wheel carrier (9), **characterized in that** the trailer support wheel (7) having the measuring device (2) is designed according to any of Claims 1 to 10.

12. Method for determining a tongue load of a trailer support wheel (7) having a measuring device (2), wherein the trailer support wheel (7) is equipped with a rotatable wheel body (8) and with a wheel carrier (9) and the measuring device (2) has a measuring means (17) mountable or mounted on the trailer support wheel (7), **characterized in that** that the tongue load is determined with a measuring means (17) which comprises an elongate wheel axle journal (18) for the wheel body (8), on which a load measuring element (23) is arranged between the journal ends.

13. Method according to Claim 12, **characterized in that** the measurement data from the measuring means (17) is evaluated, e.g. electrically or electronically, using a connected evaluation unit (27), wherein preferably the measuring device (2) preferably wirelessly communicates the measurement data from the measuring means (17) and/or an evaluation result from the evaluation unit (27) by means of a communication unit (28) to the outside.

14. Method according to Claim 12 or 13, **characterized in that** the measuring device (2) is operated with a preferably mobile operating unit (30), which has a display (31), wherein the measuring process is started and terminated preferably with the mobile operating unit (30).

15. Method according to Claim 13 or 14, **characterized in that** the measuring device (2) is operated using a dedicated operating device or using an app for a smartphone, tablet or another universal portable computer, wherein preferably the app generates a mask for the display of the measurement result and the tongue load on a monitor of the portable computer and/or a display of the measurement result and the tongue load on a dashboard of a towing vehicle.

## Revendications

1. Roue d'appui de remorque avec un dispositif de mesure (2) pour la charge d'appui agissant sur la roue (7) d'appui de remorque, la roue (7) d'appui de remorque comprenant un corps de roue rotatif (8) et un support (9) de roue, **caractérisée en ce que** le dispositif de mesure (2) comprend un moyen de mesure (17) monté sur la roue (7) d'appui de remorque, le moyen de mesure (17) comprenant une broche allongée (18) d'axe de roue pour le corps de roue (8), sur laquelle est agencée un élément (23) de mesure de charge entre les extrémités de l'axe.

2. Roue d'appui de remorque selon la revendication 1, **caractérisée en ce que** l'élément (23) de mesure de charge est agencé sur l'enveloppe de la broche (18) d'axe de roue, et l'élément (23) de mesure de charge comprend de préférence un capteur (24) absorbant une force et/ou une déformation, en particulier une jauge de contrainte.

3. Roue d'appui de remorque selon la revendication 1 ou la revendication 2, **caractérisée en ce que** la broche (18) d'axe de roue comprend une zone d'appui (19) pour le corps de roue (8) et au moins une zone d'appui (20) à l'extrémité pour le support (9) de roue, un élément (23) de mesure de charge étant agencé sur la broche (18) d'axe de roue dans une zone intermédiaire axiale (21) entre les zones d'appui (19, 20).

4. Roue d'appui de remorque selon la revendication 3, **caractérisée en ce que** la zone intermédiaire (21) est aplatie et/ou amincie par rapport aux zones d'appui adjacentes (19, 20), la zone intermédiaire (21) comprenant de préférence une perforation formant de préférence des nervures axiales parallèles (22).

5. Roue d'appui de remorque selon l'une des revendications 1 à 4, **caractérisée en ce que** le support (9) de roue comprend au moins un bras de support (10) qui reçoit la broche (18) d'axe de roue au niveau d'une zone d'appui (20) située à une extrémité, la broche (18) d'axe de roue étant de préférence reçu de manière rigide sur le ou les bras de support (10) et monté de manière solidaire en rotation à l'aide d'un moyen de fixation (26).

6. Roue d'appui de remorque selon les revendications 3, 4 ou 5, **caractérisée en ce que** le corps de roue (8) est agencé de manière rotative avec un élément (25) formant palier de roue sur la zone d'appui (19) de la broche (18) d'axe de roue.

7. Roue d'appui de remorque selon l'une des revendications 1 à 6, **caractérisée en ce que** le dispositif de mesure (2) comprend une unité d'évaluation (27) reliée au moyen de mesure (17) et de préférence une unité de communication (28) et de préférence une alimentation en énergie (29), l'unité d'évaluation (27) et/ou l'unité de communication (28) et/ou l'alimentation en énergie (29) étant de préférence agencée(s) sur le support (9) de roue.

8. Roue d'appui de remorque selon l'une des revendications 1 à 7, **caractérisée en ce que** le dispositif de mesure (2) comprend une unité de commande (30) de préférence mobile et un affichage (31).

9. Roue d'appui de remorque selon l'une des revendications 1 à 8, **caractérisée en ce que** le support (9) de roue est monté de manière rigide ou mobile, en particulier de manière élastique et mobile, sur une tige de support (11) ou sur un dispositif de réglage en longueur (12) de la roue (7) d'appui de remorque, le support (9) de roue étant de préférence orienté transversalement ou obliquement par rapport à la tige de support (11).

10. Roue d'appui de remorque selon la revendication 9, **caractérisée en ce que** le support (9) de roue est monté de manière rotative sur un bras (14) relié à la tige de support (11) ou au dispositif de réglage longitudinal (12) par l'intermédiaire d'un palier pivotant (15) et est soutenu par un ressort (16) sur la tige de support (11) ou sur le dispositif de réglage longitudinal (12).

11. Remorque de véhicule comprenant un châssis (3), un ensemble d'essieux (5) avec des roues de remorque, un timon (4), un attelage de remorque (6) à l'extrémité du timon et une roue (7) d'appui de remorque avec un dispositif de mesure (2) pour la charge d'appui agissant sur la roue (7) d'appui de remorque, la roue (7) d'appui de remorque comprenant un corps de roue rotatif (8) et un support (9) de roue, **caractérisée en ce que** la roue (7) d'appui de remorque est réalisée avec le dispositif de mesure (2) selon l'une des revendications 1 à 10.

12. Procédé pour déterminer une charge d'appui d'une roue (7) d'appui de remorque avec un dispositif de mesure (2), la roue (7) d'appui de remorque étant équipée d'un corps de roue rotatif (8) et d'un support (9) de roue et le dispositif de mesure (2) comprenant un moyen de mesure (17) qui est apte à être monté ou est monté sur la roue (7) d'appui de remorque, **caractérisé en ce que** la charge d'appui est déterminée à l'aide d'un moyen de mesure (17) qui comprend une broche allongée (18) d'axe de roue pour le corps de roue (8), sur lequel un élément (23) de mesure de charge est agencé entre les extrémités de la broche.

13. Procédé selon la revendication 12, **caractérisé en ce que** les données de mesure du moyen de mesure (17) sont évaluées au moyen d'une unité d'évaluation (27) reliée, par exemple électriquement ou électroniquement, le dispositif de mesure (2) communiquant de préférence les données de mesure du moyen de mesure (17) et/ou un résultat d'évaluation de l'unité d'évaluation (27) vers l'extérieur, de préférence sans fil, au moyen d'une unité de communication (28).

14. Procédé selon la revendication 12 ou la revendication 13, **caractérisé en ce que** le dispositif de mesure (2) est commandé par une unité de commande (30) de préférence mobile, qui comprend un affichage (31), le processus de mesure étant de préférence démarré et arrêté via l'unité de commande mobile (30).

15. Procédé selon la revendication 13 ou la revendication 14, **caractérisé en ce que** le dispositif de mesure (2) est commandé au moyen d'un appareil de commande dédié ou d'une application pour smartphone, tablette ou autre ordinateur portable universel, l'application générant de préférence un masque pour l'affichage du résultat de la mesure et de la charge d'appui sur un écran de l'ordinateur portable et/ou l'affichage du résultat de la mesure et de la charge d'appui sur un tableau de bord d'un véhicule tracteur.
